# EUROPEAN PATENT APPLICATION

(11) **EP 4 105 437 A1**
(43) Date of publication of application: **21.12.2022**
(21) Application number: 21179250.2
(22) Date of filing: 14.06.2021
(51) Int. Cl.: E21F 13/00, B60L 15/00, B60W 40/076, B60W 30/14, B60W 10/22, B60W 30/18, B60W 50/14, B60T 1/08, B60W 10/10

(54) **MINING MACHINE WITH AN OPERATOR SPEED ASSISTANT**

(71) Applicant: Sandvik Mining and Construction Oy, 33330 Tampere (FI)
(72) Inventor: MÄNNIKKÖ, Sami, 33311 Tampere (FI)
(74) Representative: Sandvik

(57) **Abstract**

A mining machine with an operator speed assistant for maintaining a speed that does not require the use of friction-based brakes is disclosed. Friction based brakes, such as service brakes, are prone to wear and tear. It is commonly desired to use engine braking possibly together with a retarder to maintain the speed of a mining machine. The operator speed assistant computes a maximum speed that can be maintained by the engine braking and retarder at the current location using the inclination information.

## Description

### DESCRIPTION OF BACKGROUND

This disclosure relates to mining machines. Particularly this disclosure relates to arrangements providing information for driving assistant systems of a mining machine.

Mining machines are often big machines operating in tight mining tunnels or galleries. Mining tunnels may be very long and typically inclined as tunnels start from the ground level and may extend thousands of meters under the surface level. Thus, when a mining machine is driving downwards the speed must be controlled continuously because the gravity causes a continuous accelerating force to the mining machine. This often causes a need for using service brakes to decelerate the mining machine. Service brakes are based on friction and using service brakes will cause wear. Worn brakes can be dangerous and thus, there is a need for maintenance when brakes are worn.

The driver of the mining machine can prevent unnecessary wear of service brakes by choosing driving speed so that service brakes do not need to be used. This can be achieved by using slow speeds that are slow enough for using engine braking. The driver needs to choose a gear that is suitable for driving downwards without braking. More advanced approaches may have a speed limiter, where the driver chooses a maximum speed for the mining machine. The mining machine then follows the decision of the driver and does not exceed sped chosen by the driver.

### SUMMARY

A mining machine with an operator speed assistant for maintaining a speed that does not require the use of friction-based brakes is disclosed. Friction based brakes, such as service brakes, are prone to wear and tear. It is commonly desired to use engine braking possibly together with a retarder to maintain the speed of a mining machine. The operator speed assistant computes a maximum speed that can be maintained by the engine braking and retarder at the current location using the inclination information.

In an aspect a mining machine is disclosed. The mining machine comprises a measurement device configured to determine an inclination angle of the driven path; at least one memory configured to store computer programs and related data; at least one processor configured to execute computer programs. The mining machine, by using the at least one processor and the at least one memory is configured to determine an inclination angle of the driven path; and retrieve a maximum speed value for the mining machine based on the determined inclination angle.

It is beneficial to determine the inclination angle wherein the speed can be controlled without using friction based brakes or similar. The gravity causes the mining machine to accelerate to higher speed. When the speed is not too high it can be controlled by using engine braking, regeneration, retarder or similar and wear and tear of friction-based brakes is reduced.

In an implementation when retrieving the maximum speed value the mining machine is further configured to retrieve a power value available for braking the mining machine from the at least one memory; and compute a maximum speed value for the mining machine, wherein the maximum speed can be maintained using the retrieved power value. It is beneficial to know the power available for braking so that the maximum speed can be computer more exactly.

In an implementation the mining machine is further configured to set the computed maximum speed value as a speed limit for the mining machine. It is beneficial to set the determined speed value as a speed limit so that the mining machine is prevented driving faster. The speed limit can be set automatically so that the driver of the mining machine does not need to take care of the setting.

In an implementation the mining machine, when the current speed exceeds the speed limit, is further configured to set the computed maximum speed value gradually as a speed limit for the mining machine. It is beneficial to set the speed limit gradually so that the change is smooth. In some conditions the smooth change may be possible even without frictional brakes when faster change would require using frictional brakes.

In an implementation when the current speed exceeds the speed limit the mining machine is further configured to decelerate in accordance with the set speed limit. It is beneficial that the mining machine can decelerate automatically so that the speed change is performed immediately so that the driver does not need to follow the changes continuously but can trust that the mining machine knows the current maximum speed.

In an implementation the mining machine is further configured to display the speed limit to the driver. It is beneficial that the driver is able see what is the current speed limit and is able to react if there is inconsistency in the situation.

In an implementation the measurement device further comprises an acceleration sensor, wherein the mining machine, by using the at least one processor and the at least one memory is further configured to compute the inclination angle of the mining tunnel. An acceleration sensor is a beneficial way to measure the inclination angle as it indicates accurately even small changes in the inclination by monitoring the acceleration of the mining machine. When the acceleration caused by the movement of the mining machine is compensated the inclination angle can be computed from the acceleration caused by the gravity.

In an implementation the mining machine further comprises an arrangement configured to measure a second inclination angle, wherein the second inclination angle is caused by the suspension of the mining machine and the mining machine is further configured to compensate the determined inclination angle of the driven path by using the second inclination angle. It is beneficial to detect the inclination caused by the suspension and possibly other components in the mining machine that might cause additional inclination in relation to the driven path. This improves the accuracy of the inclination determination and thus, will allow more accurate maximum speed value.

In an implementation the mining machine further comprises a measurement arrangement configured to measure the weight of the mining machine. It is beneficial to detect if the mining machine has load and how the possible load changes the accelerating force.

In an implementation the at least one processor is configured to use the measured weight in computing the maximum speed value. It is beneficial to take the weight into account when determining the maximum speed as the possible maximum speed for heavier vehicles is generally lower. When the weight is taken into account the maximum speed value is more accurate and faster driving without using the frictional brakes is possible.

In an aspect a method for operating a mining machine is disclosed. The method comprises determining an inclination angle of the driven path; and retrieving a maximum speed value for the mining machine based on the determined inclination angle.

In an implementation retrieving the maximum speed value comprises retrieving a power value available for braking the mining machine from the at least one memory; and computing a maximum speed value for the mining machine, wherein the maximum speed value can be maintained using the retrieved power value.

In an implementation the method further comprises setting the computed maximum speed value as a speed limit for the mining machine.

In an implementation, when the current speed exceeds the speed limit, the method further comprises setting the computed maximum speed value gradually as a speed limit for the mining machine.

In an implementation, when the current speed exceeds the speed limit the mining machine is further configured to decelerate in accordance with the set speed limit.

In an implementation the method further comprises displaying the speed limit to the driver.

In an implementation the method further comprises computing the inclination angle of the mining tunnel.

In an implementation the method further comprises measuring the weight of the mining machine; and using the measured weight in computing the maximum speed value.

### BRIEF DESCRIPTION OF THE DRAWINGS

The accompanying drawings, which are included to provide a further understanding of the operator speed assistant for a mining machine and constitute a part of this specification, illustrate examples and together with the description help to explain the principles of the operator speed assistant for a mining machine. In the drawings:
**Fig. 1** is a block diagram of an example of a mining machine with an operator speed assistant;
**Fig. 2** is a flow chart of an example of a method; and
**Fig. 3** is a flow chart of another example of a method.

### DETAILED DESCRIPTION

Reference will now be made in detail to the examples which are illustrated in the accompanying drawings.

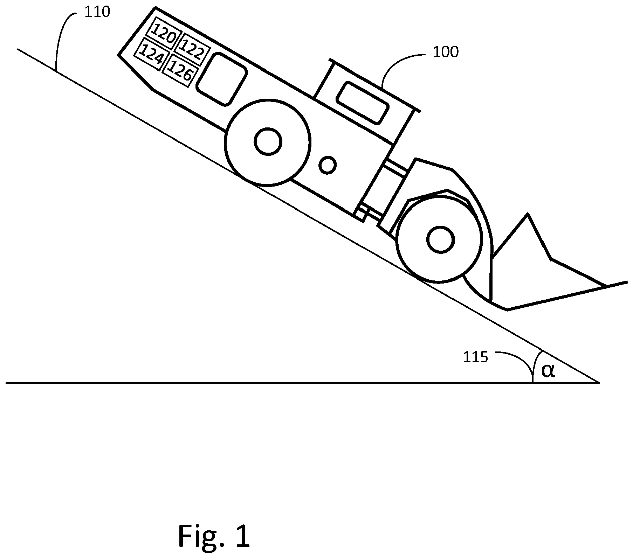

Fig. 1 discloses an example of a mining machine with an operator speed assistant. The mining machine 100 is travelling downwards in a mining tunnel or a similar. The ground 110 of the tunnel is typically inclined so that the mine extends deeper into the ground. In the example of Fig. 1 the angle 115 is shown as an inclination angle of the current location for a mining machine. It is understood that the inclination angle may vary in the mine and some mining tunnels have more inclined sections. Thus, the force caused by the gravity varies while the mining machine 100 is driven in the mining tunnel.

The mining machine 100 of the example is a conventional mining machine with a conventional power train comprising a combustion engine and a gear box. The mining machine of the example of Fig. 1 is manually driven by a human operator. However, instead of a traditional machine a more modern machines with electric power trains may be used. Furthermore, the driving may be partially or fully automated. Thus, instead of a mining machine of the Fig. 1 the mining machine may be an autonomous electric mining machine, an electric mining machine driven by a human operator or any similar arrangement, wherein a mining machine is instructed to drive or driven into a mining tunnel having an inclination angle that causes an accelerating force to the mining machine.

In the example of Fig. 1 the mining machine comprises a measurement device 120, at least one processor 122, at least one memory 124 and a second measurement device 126. In the example of Fig. 1 the first measurement device is an accelerometer, an acceleration sensor or similar. The second measurement device 126 is a speedometer, speed indicator or similar 126. Together with two devices it is possible to compute a force value how the gravity is accelerating the mining machine 100. This is done by compensating the acceleration value received from the first measurement device 120 by the acceleration that is caused by the movement of the mining machine 100. The movement can be measured by a speedometer or other measurement device that can computed the value for compensation.

The at least one memory 124 comprises information about different factors for limiting the speed of the mining machine 100 without using the service brake or other friction-based brake. This information includes information about gears, engine braking capacity, retarder capacity and similar. In case of an electric mining machine this information may include information with regard different regeneration modes. The information is used by the at least one processor 122, which is configured to execute a method for operator speed assistant that receives current conditions as parameters, computes a speed limit and adjusts the speed of the mining machine according to the computed speed limit. This adjusting may be performed independently or with help of other assistant systems.

In the example of Fig. 1 the at least one processor 122 receives parameters for performing the calculation. These parameters may include speed limit adjust mode, mining machine speed, engine speed, converter lock status, machine automation mode status, inclination angle, gear ratio or similar. The information available is used to compute a speed that can be maintained using engine braking and retarder in the current environment. In order to do the computation the mining machine uses the first measurement device 120 to compute the inclination angle. When the inclination angle is known the acceleration caused by the gravity can be computed by compensating the acceleration caused by the movement of the mining machine. In the example of Fig. 1 engine braking and a retarder are used. It is possible to use only engine braking or additional devices that can be used for braking so that the mechanical wear is reduced. In the above the at least processor 122 is explained to process simple values in order to compute the maximum speed value, however, in more advanced solutions the at least one processor 122 may be configured to simulate different parameters. For example, the at least one processor 122 may estimate the engine braking capability with different gears and engine speeds with the given inclination angle.

Instead of using the accelerometer and speedometer, it is possible to use different means to detect the inclination angle. There may be a separate inclinometer that provides the inclination directly. Another example is a map with positioning system, wherein the map may include the inclinations for specific locations in the mining tunnel. A simple example is an inclination table and a camera so that the mining machine acquires an image and detects the inclination angle from the image. The above described means are only presented as examples and also other suitable tools for measuring the inclination angle of the mining tunnel may be used.

When the inclination angle has been acquired the processor may compute, using all parameters retrieved from the memory, an output comprising the speed limit. The output may further comprise a maximum gear to be used, an engine brake command, service brake command, maximum engine RPM command and limitation active status. The speed limit or a similar maximum speed value may be given as a single value. Optionally the speed limit may be given as a curve or a set of speed values so that the speed limit is reach smoothly from the current speed. Furthermore, this deceleration process may involve changing gears. Thus, it may require some time to slow from the current speed into the speed limit. The slowing process may require using the service brakes of the mining machine. This may be necessary particularly when the inclination angle increases and the gravity force accelerating the mining machine increases.

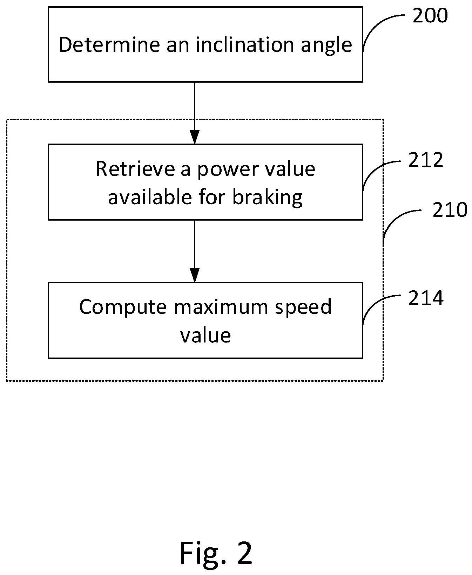

In Fig. 2 an example of a method is disclosed. The method is implemented in a mining machine. Typically, the mining machine is driven downwards for retrieving mining products from the mine for further processing. Thus, commonly the mining machine drives into the mine empty, which is assumed in the examples of this disclosure. However, should the mining machine carry a load, it can be taken into account by estimating the overall weight of the mining machine.

The example of Fig. 2 is a simple example discussing about the main principles of the operator speed assistant. The method of the example is not performed once but may be a continuous monitoring process or operated at certain intervals. Thus, when the mining machine proceeds in the mining tunnel a measurement device detects a change in the inclination angle, step 200.

The inclination angle may be used in several different ways, however, the purpose of the detection is to retrieve or determine a maximum speed value that is allowed or recommended for the mining machine, step 210. This may be done, for example, by assuming the weight of the mining machine to be the same always when the mining machine is travelling downwards. In such a case it is possible to retrieve the value from a database or information source.

In the example of Fig. 2 the maximum speed value determined as explained in the following. First the mining machine retrieves a power value that is available limiting the speed of the mining machine using desired means, step 212. Typically, in a conventional mining machine this is the power from engine braking and a retarder. The power value is retrieved using parameters including information on gearing and the engine speed. This may be variable depending on the used gear and engine speed. Thus, a simple retrieval from the database is not sufficient but the maximum speed value needs to be calculated.

Finally, when the inclination angle and the power value are known, it is possible to calculate a speed that can be maintained using the power value in the current inclination, step 212. Thus, the mining machine will proceed in the tunnel using the calculated maximum speed value. Using the maximum speed, the machine is continuously driven at a speed that can be controlled without using frictional brakes unless the conditions change. For example, if the inclination changes and the tunnel is steeper, then the frictional brakes may need to be used for reducing the speed to match a new lower speed limit. Another example of a need for reducing the frictional brakes is traffic or other reasons that are not directly related to the inclination angle of the mining tunnel.

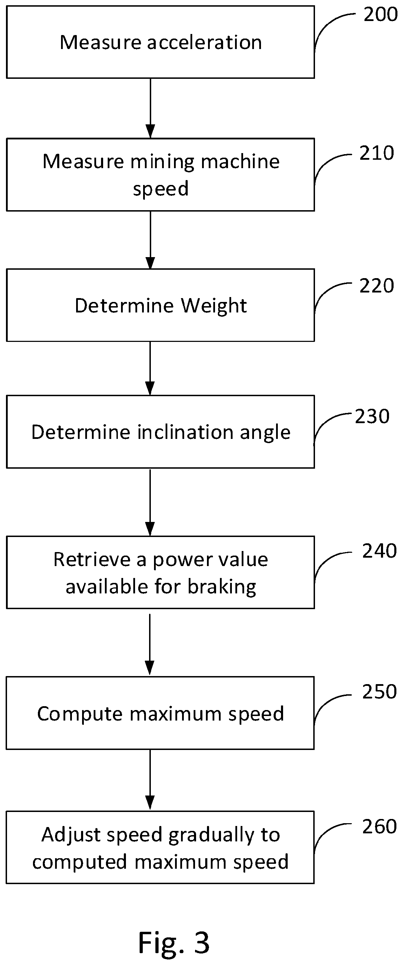

In Fig. 3 another example of a method is disclosed. In the method first acceleration is measured using an accelerometer, step 200. The measurement result comprises components deriving from the gravity and the movement of the vehicle unless the vehicle is stationary at that moment. The mining machine comprises means for measuring the speed of the mining machine. Using the means, such as a common speedometer, the speed is measured, step 212. Additionally, the weight of the mining machine may be determined, step 214. There are several different methods for determining weight. For example, when the carried material is known the average weight can be estimated from an image. Separate weighing devices may be used, or the weight of the loaded material may be received from an additional system. The inclination angle can be computed from these measurements, step 230.

In the example of Fig. 3 the machine is a modern autonomous mining machine with an electric power train. In the method the machine retrieves power value for regenerative braking, step 240. The power value is not necessary for the maximum speed value but for maximum regeneration so that when the machine is driving downwards as much electricity can be regenerated and stored in the battery system of the mining machine. Thus, when the maximum speed value for speed limiter is computed, step 250, it may be a speed limit that takes both saving the brakes and electricity regeneration into account. Finally, the mining machine adjusts the operating speed according to the speed limit, step 250.

In the examples above the inclination angle is assumed to change so that the tunnel will be steeper. However, the similar principles apply when the inclination angle decreases, and the slope will be gentler. In such situation less power is needed for braking and thus, the speed limit can be increased. Gradual change may be used also when increasing the speed limit so that the required peak power is decreased.

In the above examples disclosing a conventional mining machine with an internal combustion engine and more modern mining machine with an electric motor are discussed. The disclosed operator speed assistant is applicable with both of the examples and also further examples that are only briefly described in the following. For example, it might be desired to configure the conventional mining machine with an internal combustion engine in a manner that the engine braking is not used. In such situation the power value for braking would be derived, for example, from a retarder only. In another example the mining machine is configured so that it have different types of friction based brakes and only some of the are used in computing the power value. Thus, the power value is computed in a manner that the use of at least one braking arrangement is reduced. This leads into less wear and tear in the brakes because of the reduced use.

In a further example the regenerative braking explained above is used to charge the battery of the miming machine. Thus, the power value may be determined in a manner to maximize the power in the battery of the miming machine. However, the similar principle may be applied also in the cases, wherein the electric mining machine does not have a separate battery but receives the electricity from a conductor rail, bus bar or wire arrangement. In such cases the regenerated power may be fed back to the grid supplying the mining machine.

Advanced mining machines may include additional sensors that measure the inclination caused by the machine itself. The above discussed measurement means are installed on mining machine. Thus, they measure the inclination when the mining machine is in a normal position or normally inclined. Additional inclination maybe caused, for example, by the suspension or changed tire pressure. An advanced mining machine is aware of the inclination caused by the suspension and can measure it. The measured inclination caused by the suspension, or alike, is compensated when determining the inclination angle of the driven path. The elimination of additional inclinations improves the accuracy of the measurement, which is beneficial as the it is the inclination of the mining tunnel that causes the acceleration by the gravity. The more accurate the measurement is the more accurately the maximum speed value can be set. The arrangements disclosed above are beneficial also in cases wherein the determination of the inclination is rougher estimate, however, generally more accurate measurements provide better results and provide higher speeds with reduced use of frictional braking.

The above-mentioned arrangements may include computer software which is executed in a computing device, which may be integrated at the operator speed assistant for a mining machine. When the software is executed in a computing device it is configured to perform the above described inventive method. The software is embodied on a computer readable medium so that it can be provided to the computing device, such as the at least one processor 122 of Fig. 1.

As stated above, the components of the examples can include computer readable medium or memories for holding instructions programmed according to the teachings of the present inventions and for holding data structures, tables, records, and/or other data described herein. Computer readable medium can include any suitable medium that participates in providing instructions to a processor for execution. Common forms of computer-readable media can include, for example, a floppy disk, a flexible disk, hard disk, magnetic tape, any other suitable magnetic medium, a CD-ROM, CD±R, CD±RW, DVD, DVD-RAM, DVD±RW, DVD±R, HD DVD, HD DVD-R, HD DVD-RW, HD DVD-RAM, Blu-ray Disc, any other suitable optical medium, a RAM, a PROM, an EPROM, a FLASH-EPROM, any other suitable + chip or cartridge, a carrier wave or any other suitable medium from which a computer can read.

It is obvious to a person skilled in the art that with the advancement of technology, the basic idea of the operator speed assistant may be implemented in various ways. The driving assistance system and its embodiments are thus not limited to the examples described above; instead they may vary within the scope of the claims.

## Claims

1. A mining machine comprising:
a measurement device configured to determine an inclination angle of a driven path;
at least one memory configured to store computer programs and related data;
at least one processor configured to execute computer programs;
wherein the mining machine, by using the at least one processor and the at least one memory is configured to:
determine an inclination angle of the driven path; and
retrieve a maximum speed value for the mining machine based on the determined inclination angle.

2. A mining machine according to claim 1, wherein when retrieving the maximum speed value the mining machine is further configured to:
retrieve a power value available for braking the mining machine from the at least one memory; and
compute a maximum speed value for the mining machine, wherein the maximum speed can be maintained using the retrieved power value.

3. A mining machine according to claim 1 or 2, wherein the mining machine is further configured to set the computed maximum speed value as a speed limit for the mining machine.

4. A mining machine according to claim 3, wherein the mining machine, when the current speed exceeds the speed limit, is further configured to set the computed maximum speed value gradually as a speed limit for the mining machine.

5. A mining machine according to claim 3 or 4, wherein when the current speed exceeds the speed limit the mining machine is further configured to decelerate in accordance with the set speed limit.

6. A mining machine according to any of preceding claims 1 - 5, wherein the measurement device further comprises an acceleration sensor, wherein the mining machine, by using the at least one processor and the at least one memory is further configured to compute the inclination angle of the mining tunnel.

7. A mining machine according to any preceding claims 1 - 6, wherein the mining machine further comprises an arrangement configured to measure a second inclination angle, wherein the second inclination angle is caused by the suspension of the mining machine and the mining machine is further configured to compensate the determined inclination angle of the driven path by using the second inclination angle.

8. A mining machine according to any of claims 1 - 7, wherein the mining machine further comprises a measurement arrangement configured to measure the weight of the mining machine.

9. Mining machine according to claim 8, wherein the at least one processor is configured to use the measured weight in computing the maximum speed value.

10. A method for operating a mining machine comprising:
determining an inclination angle of a driven path; and
retrieving a maximum speed value for the mining machine based on the determined inclination angle.

11. A method according to claim 10, wherein retrieving the maximum speed value comprises:
retrieving a power value available for braking the mining machine from the at least one memory; and
computing a maximum speed value for the mining machine, wherein the maximum speed value can be maintained using the retrieved power value.

12. A method according to claim 10 or 11, wherein the method further comprises setting the computed maximum speed value as a speed limit for the mining machine.

13. A method according to claim 11, wherein when the current speed exceeds the speed limit, the method further comprises setting the computed maximum speed value gradually as a speed limit for the mining machine.

14. A method according to claim 12 or 13, wherein when the current speed exceeds the speed limit the mining machine is further configured to decelerate in accordance with the set speed limit.

15. A method according to any of claims 10 - 14, wherein the method further comprises measuring the weight of the mining machine; and using the measured weight in computing the maximum speed value.
